Europäisches Patentamt

European Patent Office

Office européen des brevets

(19)

(11) Veröffentlichungsnummer: **0 320 597 B1**

(12)   # EUROPÄISCHE PATENTSCHRIFT

(45) Veröffentlichungstag der Patentschrift: **16.12.92**

(51) Int. Cl.5: **E04F  13/08**

(21) Anmeldenummer: **88117238.1**

(22) Anmeldetag: **17.10.88**

(54) **Fassadenplatte mit einem Befestigungselement.**

(30) Priorität: **18.12.87 DE 3743024**

(43) Veröffentlichungstag der Anmeldung:
**21.06.89 Patentblatt  89/25**

(45) Bekanntmachung des Hinweises auf die
Patenterteilung:
**16.12.92 Patentblatt  92/51**

(84) Benannte Vertragsstaaten:
**AT BE CH ES FR GB IT LI NL SE**

(56) Entgegenhaltungen:
**DE-A- 2 825 705**
**DE-A- 3 018 016**
**FR-A- 2 515 309**

(73) Patentinhaber: **fischer-werke Artur Fischer
GmbH & Co. KG
Weinhalde 14-18
W-7244 Waldachtal 3/Tumlingen(DE)**

(72) Erfinder: **Fischer, Artur, Prof. Dr. h.c.
Weinhalde 34
W-7244 Waldachtal 3/Tumlingen(DE)**
Erfinder: **Körner, Karl
Ossietzkystrasse 4
W-7000 Stuttgart 1(DE)**

## Beschreibung

Die Erfindung betrifft eine Vorrichtung zur Befestigung von Fassadenplatten mit einem Befestigungselement und einem Haltebügel gemäß der Gattung des Anspruches 1.

Die Befestigung von dünnwandigen Fassadenplatten, die beispielsweise eine Plattenstärke von 1cm haben, kann mittels an der Rückseite der Fassadenplatten zu befestigenden Hal-tebügel aus Metall erfolgen. Die Haltebügel besitzen abgewinkelte Laschen, mit denen sie an entsprechenden Querleisten oder Querverstrebungen an der Außenseite von Fassaden eingehängt werden können. Aus Sicherheitsgründen muß dabei die Verbindung zwischen Haltebügel und Fassadenplatte hohen Anforderungen gerecht werden, weshalb die Haltebügel nicht lediglich an der Rückseite der Fassadenplatte festgeklebt werden sollen.

Aus der DE-A-3 018 016 ist eine gattungsgemäße Fassadenplatte bekannt, bei der mit einem Befestigungselement der Haltebügel an der Rückseite der Fassadenplatte befestigbar ist. Das Befestigungselement weist einen Spreizkörper mit einem Spreizbereich auf, der durch ein sich zum einen Ende hin konisch verjüngendes Innengewinde gebildet ist. In dieses Innengewinde wird eine Schraube zur Verankerung des Befestigungselementes in einer Sacklochbohrung der Fassadenplatte eingeschraubt. Beim Einschraubvorgang wird gleichzeitig der Haltebügel mit dem Kopf der Schraube gegen die Rückseite der Fassadenplatte verspannt.

Durch die Kombination des Verankerungs- und Verspannungsvorganges mit einer Schraube ist es nicht möglich, die Spreizkraft entsprechend den jeweiligen Anforderungen zu dosieren, da in jedem Fall die Verspannung des Haltebügels erreicht werden muß. Dies kann bei entsprechend engen Toleranzen dazu führen, daß ein zu hoher Spreizdruck erzeugt wird, der zu einem Ausbrechen des Bohrloches in der Fassadenplatte führt. Bei zu weiten Toleranzen oder bei einem zu tief im Bohrloch sitzenden Befestigungselement wird eine zu geringe Spreizkraft erzeugt, so daß ungenügende Haltewerte erreicht werden. Desweiteren ist der Schraubenkopf Korrosionsangriffen ausgesetzt.

Der Erfindung liegt die Aufgabe zugrunde, eine Vorrichtung zur Befestigung von Fassadenplatten zu schaffen, bei der eine exakte Positionierung des Befestigungselementes im Bohrloch sowie getrennt die Spreiz- und Verspannungskräfte aufgebracht werden können. Gleichzeitig soll ein erhöhter Korrosionsschutz erreicht werden.

Die Lösung dieser Aufgabe wird bei einer Fassadenplatte der eingangs genannten Gattung durch die im Anspruch 1 angegebenen Merkmale erreicht. Insbesondere bei der Verwendung von Ver-bund und Fassadenplatten, die rückseitig eine Dämmstoffschicht haben, sind die aus Naturstein oder Kunststein gefertigten Fassadenplatten verhältnismäßig dünn ausgeführt. Der Naturstein oder Kunststein kann dabei eine Dicke von etwa 1cm haben. Durch die Anbringung von Sacklochbohrungen an der Rückseite dieser dünnwandigen Fassadenplatte kann darin ein erfindungsgemäßer Spreizkörper eingesetzt werden, der durch Einschrauben eines Gewindestiftes aufgespreizt wird. Der Gewindestift wird dabei solange eingedreht, bis eine ausreichende Verankerung erreicht ist. In Abhängigkeit von den Toleranzen des Bohrloches und des Befestigungselementes ergibt dies ein mehr oder weniger großer Überstand gegenüber dem Befestigungselement. Nach dem Überstülpen des aus Flachbandeisen gefertigten Haltebügels über den die Fassadenplatte überragenden Teil des Befestigungselementes wird der Haltebügel mit der auf den überstehenden Teil des Gewindestiftes aufschraubbaren Haltekappe gegen die Rückseite der Fassadenplatte verspannt. Durch entsprechende Länge des Innengewindes der Haltekappe wird der unterschiedliche Überstand des Gewindestiftes ausgeglichen. Die Haltekappe ist vorzugweise aus Kunststoff gefertigt, so daß das Befestigungselement und der Gewindestift gegen Korrosion geschützt sind.

Am Gewindestift, Spreizkörper und an der Haltekappe können Aussparungen oder Flächen vorgesehen sein, die zum Ansetzen eines geeigneten Schraubwerkzeugs oder Haltewerkzeugs geeignet sind.

Die Erfindung wird nachfolgend anhand eines in der Zeichnung dargestellten Ausführungsbeispiels näher erläutert.

Es zeigen:

Figur 1    die Rückseite einer erfindungsgemäßen Fassadenplatte ohne Dämmschicht,

Figur 2    die Seitenansicht der in Figur 1 dargestellten Fassadenplatte mit Dämmschicht im Schnitt,

Figur 3    einen vergrößerten Querschnitt im Bereich eines Befestigungselementes und

Figur 4    das in Figur 3 dargestellte Befestigungselement vor der Montage.

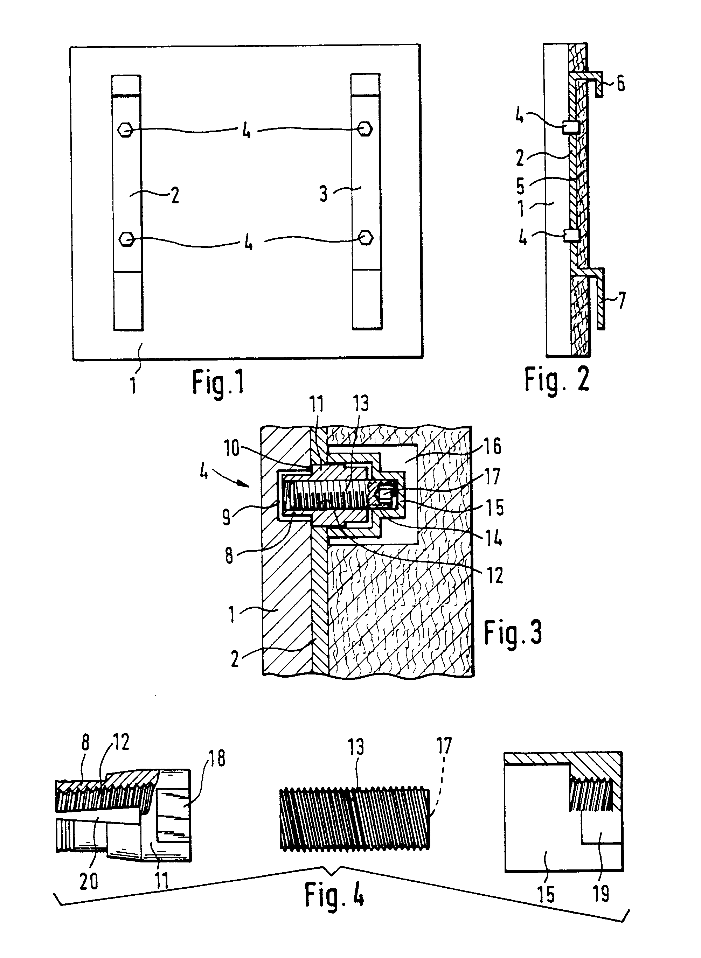

An der Rückseite der in Figur 1 dargestellten Fassadenplatte 1 sind zwei Haltebügel 2,3 aufgeklebt, die zusätzlich mittels Befestigungselementen 4 gesichert sind.

In Figur 2 ist insbesondere die Form eines Haltebügels 2 erkennbar, der rückseitig über eine zusätzliche Dämmstoffplatte 5 mit abgewinkelten Laschen 6,7 hinausragt.

In Figur 3 ist ein gegenüber Figur 2 vergrößert dargestelltes Befestigungselement 4 im Schnitt gezeigt. Das Befestigungselement 4 greift mit seinem Spreizbereich 8 in eine Sacklochbohrung 9 der Fassadenplatte 1 ein. Mit einem Anschlagbund 10 liegt das Befestigungselement am Rand der Sacklochbohrung 9 an. Der Spreizbereich 8 ist Teil eines metallischen Spreizkörpers 11, in dessen Innengewinde 12 ein Gewindestift 13 eingreift. Am überstehenden Ende 14 des Gewindestiftes 13 ist als Halteelement eine Haltekappe 15 aufgeschraubt, die den Spreizkörper 11 bis zum Haltebügel 2 übergreift. Die Haltekappe 15 fixiert damit den Haltebügel 2 sicher an der Rückseite der Fassadenplatte 1.

In der Dämmstoffplatte 5 ist eine Aussparung 16 vorgesehen, in die der überstehende Teil des Befestigungselementes 4 hineinragt.

In Figur 4 ist das Befestigungselement nochmals vor der Montage dargestellt. Hier ist insbesondere deutlich erkennbar, wie sich im Spreizbereich 8 das Innengewinde 12 zum Ende hin verjüngt. Durch diese Verjüngung spreizt sich der Spreizbereich 8 beim Eindrehen des Gewindestiftes 13 auf, wodurch sich das Befestigungselement in der Sacklochbohrung 9 verspannt.

Der Gewindestift 13 besitzt eine Inbusbohrung 17 zum Ansetzen eines Inbusschlüssels. Am Spreizkörper 11 und an der Haltekappe 15 sind Abflachungen 18, 19 vorgesehen, die als Haltefläche zum Ansetzen eines Schraubenschlüssels oder dgl. dienen. Der Spreizkörper 11 besitzt über den Spreizbereich 8 hinausgehende Längsschlitze 20 die über den Umfang gleichmäßig verteilt angeordnet sind.

## Patentansprüche

1. Fassadenplatte (1) mit einem Befestigungselment zum Befestigen eines Haltebügels (2) an der Rückseite der Fassadenplatte, wobei das Befestigungselement (4) einen Spreizkörper (11) mit einem Spreizbereich hat, mit dem es in eine Sacklochbohrung (9) der Fassadenplatte (1) eingesetzt ist, sowie der Spreizkörper (11) im Spreizbereich ein sich zum einen Ende hin konisch verjüngendes Innengewinde (12) aufweist, in das ein Gewindestift (13) eingeschraubt ist, und am Befestigungselement (4) ein Halteelement angebracht ist, das den Haltebügel (2) gegen die Rückseite der Fassadenplatte (1) drückt, **dadurch gekennzeichnet,** daß der Spreizkörper (11) einen Anschlagbund (10) aufweist, der am Rand der Sacklochbohrung (9) anliegt, und daß auf dem überstehenden Gewindestift (13) als Halteelement eine Haltekappe (15) aufgeschraubt ist, die einen Teil des Spreizkörpers (11) übergreift.

2. Fassadenplatte nach Anspruch 1, **dadurch ge-**

**kennzeichnet,** daß der Gewindestift (13) eine Inbusbohrung (17) aufweist, und daß der Spreizkörper (11) sowie die Haltekappe (15) seitliche Halteflächen (18;19) zum Ansetzen eines Werkzeuges haben.

3. Fassadenplatte nach Anspruch 1, **dadurch gekennzeichnet,** daß die Haltekappe (15) aus Kunststoff besteht.

## Claims

1. Facing panel (1) having a fixing element for securing a retaining strap (2) to the back of the facing panel, the fixing element (4) having an expansible member (11) with an expansion region which is inserted into a blind drilled hole (9) in the facing panel (1), and the expansible member (11) having in the expansion region an internal thread (12) that tapers conically towards one end, a threaded pin (13) being screwed into the internal thread (12), and a retaining element, which presses the retaining strap (2) against the back of the facing panel (1), being attached to the fixing element (4), characterised in that the expansible member (11) has a stop collar (10) that rests on the rim of the blind drilled hole (9), and that, as retaining element, a retaining cap (15) is screwed onto the projecting threaded pin (13) and fits over a portion of the expansible member (11).

2. Facing panel according to claim 1, characterised in that the threaded pin (13) has a hexagonal socket (17), and that the expansible member (11) and the retaining cap (15) have lateral contact surfaces (18; 19) for receiving a tool.

3. Facing panel according to claim 1, characterised in that the retaining cap (15) is made of plastics material.

## Revendications

1. Panneau (1) de revêtement de façade, comportant un élément de fixation destiné à fixer un étrier (2) de retenue à la face postérieure de ce panneau, cet élément (4) de fixation comportant un corps (11) expansible à segment (8) expansible, au moyen duquel il est inséré dans un trou borgne (9) du panneau (1), ce corps (11) expansible comportant dans ce segment expansible un taraudage (12) conique, dont la section diminue vers son extrémité et dans lequel un goujon (13) fileté est vissé, et un élément de retenue, qui applique l'étrier (2) de retenue contre la face postérieure du panneau (1), étant monté sur l'élément de fixation (4), panneau caractérisé en ce que le corps (11) expansible comporte un épaulement (10) de butée, qui est appliqué contre le bord du trou borgne (9), et en ce qu'un capuchon (15) de retenue, constituant l'élément de retenue, et vissé sur la partie dépassante du goujon (13) fileté, recouvre une partie de ce corps (11) expansible.

2. Panneau de revêtement de façade selon la revendication 1, caractérisé en ce que le goujon (13) fileté comporte un logement (17) hexagonal pour une clé et en ce que le corps (11) expansible et le capuchon (15) de retenue comportent des plats (18, 19) latéraux permettant l'application en prise d'un outil.

3. Panneau de revêtement de façade selon la revendication 1, caractérisé en ce que le capuchon (15) de retenue est en matière plastique.

Fig.1

Fig. 2

Fig.3

Fig. 4